# FASCICULE DE BREVET EUROPEEN

(11) **EP 2 925 542 B1**
(45) Date de publication et mention de la délivrance du brevet: **03.05.2017**
(21) Numéro de dépôt: 13794920.2
(22) Date de dépôt: 22.11.2013
(51) Int. Cl.: B60C 11/12, B60C 11/03

(54) **BANDE DE ROULEMENT POUR PNEUMATIQUE NEIGE COMPORTANT DES INCISIONS ET DES CAVITES**
WINTERREIFENLAUFSTREIFEN MIT EINSCHNITTEN UND HOHLRÄUMEN
TREAD FOR WINTER TIRE COMPRISING SIPES AND CAVITIES

(30) Priorité: 29.11.2012 FR 1261417
(43) Date de publication de la demande: 07.10.2015
(73) Titulaire: Compagnie Générale des Etablissements Michelin, 63000 Clermont-Ferrand (FR); Michelin Recherche et Technique S.A., 1763 Granges-Paccot (CH)
(72) Inventeur: LEDIEU, Vincent, F-63040 Clermont-Ferrand Cedex 9 (FR); FRAENKEL, Bertrand, F-63040 Clermont-Ferrand Cedex 9 (FR); BATNINI, Illyes, F-63040 Clermont-Ferrand Cedex 9 (FR); VANTAL, Marie-Hélène, F-63040 Clermont-Ferrand Cedex 9 (FR)
(74) Mandataire: Demaure, Pierre-Yves
(86) Numéro de dépôt international: PCT/EP2013/074430
(87) Numéro de publication internationale: WO 2014/082922

(56) Documents cités:
- EP-A1- 0 543 267
- WO-A1-2010/144091
- JP-A- H09 277 805

## Description

### DOMAINE DE L'INVENTION

La présente invention concerne une bande de roulement pour un pneumatique de type pneumatique neige. Plus particulièrement, l'invention concerne un pneumatique neige présentant des performances d'adhérence en fin de vie améliorées.

### ETAT DE LA TECHNIQUE

Un pneumatique pour roulages hivernaux, dit pneumatique neige, comporte de manière connue en soit une bande de roulement pourvue d'une pluralité d'incisions. Cet ajout d'incisions dans la bande de roulement d'un pneumatique a été, notamment, divulgué dans le document FR759592 et son addition FR43383.

Les incisions délimitent sur la bande de roulement des lames de gomme présentant des arêtes aptes à venir gratter la neige au cours d'un roulage sur une chaussée enneigée, ce qui améliore l'adhérence sur cette chaussée. L'action des arêtes sur la chaussée est d'autant plus importante lorsque la bande de roulement est à l'état neuf. En effet, dans cet état, les lames de gomme présentent un grand élancement, c'est-à-dire une grande hauteur pour une largeur faible relativement à cette hauteur. Ainsi, lorsque les lames pénètrent dans l'empreinte de contact avec la chaussée, celles-ci basculent. Les pressions qu'exercent les arêtes des lames sur la chaussée sont alors augmentées. Un tel phénomène est notamment illustré à la figure 3 du document FR2418719.

Avec l'usure de la bande de roulement, la hauteur des lames diminue et la déformation de ces lames, lorsqu'elles pénètrent dans l'empreinte de contact, décroît également. En conséquence, l'effet de grattage des arêtes diminue avec l'usure de la bande de roulement.

En vue de maintenir une bonne adhérence d'un pneumatique neige, et ceci même à un niveau d'usure avancé, il a été proposé dans le document EP0378090 de pourvoir la bande de roulement de ce pneumatique avec des incisions complexes qui se dédoublent à partir d'une certaine profondeur. Vue en coupe, chacune de ces incisions présente une première partie rectiligne s'étendant radialement dans la bande de roulement et une seconde partie prolongeant la première partie et comportant deux branches. Avec une telle configuration, la densité d'incisions sur la bande de roulement en fin de vie est supérieure à la densité d'incisions de cette bande de roulement en début de vie ce qui permet d'augmenter en conséquence le nombre d'arêtes et donc l'adhérence de ce pneumatique lorsque son usure atteint un certain niveau. Le document WO2010/144091 correspondant au préambule de la revendication 1 divulgue également de telles incisions complexes.

Afin d'améliorer encore d'avantage l'adhérence de ce pneumatique en fin de vie, il est possible d'insérer, entre les incisions complexes, des incisions simples s'étendant de manière rectiligne dans la profondeur de la bande de roulement, comme cela est illustré à la figure 4 du document EP0378090. Cependant, en augmentant le nombre d'incisions dans la bande de roulement, on diminue d'autant plus l'espace occupé par les lames de gomme entre ces incisions. La tenue mécanique de ces lames est alors diminuée et le risque d'un arrachement de tout ou partie de ces lames au cours du fonctionnement du pneumatique est augmenté.

Il existe donc un besoin d'améliorer l'adhérence des pneumatiques neiges, notamment en fin de vie, tout en maintenant, voire améliorant, leur résistance mécanique globale.

### DEFINITIONS

Par « pneumatique », on entend tous les types de bandages élastiques soumis à une pression interne ou non.

Par « pneumatique neige » (« snow tyre » ou « winter tyre » en anglais), on entend un pneumatique repéré par une inscription M+S ou M.S. ou encore M&S, marquée sur au moins un des flancs du pneumatique. Ce pneumatique neige se caractérise par un dessin de la bande de roulement et une structure destinés avant tout à assurer, dans la boue et la neige fraîche ou fondante, un comportement meilleur que celui d'un pneumatique du type routier (en anglais appelé « road type tyre ») conçu pour rouler sur des chaussées non enneigées.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement » d'une bande de roulement, on entend ici l'ensemble des points de la bande de roulement qui entrent en contact avec un sol lorsque le pneumatique, gonflé à sa pression de référence et sans clous, roule sur ce sol. La pression de gonflage de référence est définie dans les conditions d'utilisation du pneumatique, conditions précisées notamment par la norme E.T.R.T.O.

Par « taux d'usure » de la bande de roulement, on entend le ratio entre une épaisseur que la bande de roulement a perdu par l'usure et l'épaisseur totale que la bande de roulement peut perdre avant de devoir être remplacée. Ainsi, un taux d'usure de 25% signifie que la bande de roulement a perdu un quart du matériau caoutchoutique à user.

Par « fin d'usure » de la bande de roulement, on entend que l'épaisseur de la bande de roulement a atteint la hauteur réglementaire d'un témoin d'usure dans cette bande. Dans le cas d'un pneumatique pour un véhicule de tourisme, cette hauteur réglementaire est de 1,6 mm.

Par « incision », on entend une découpure générant des parois de matière opposées. La distance entre les parois de matière de l'incision est appropriée pour permettre la mise en contact au moins partielle de ces parois lors du passage dans l'empreinte de contact avec le sol.

Par « rainure », on entend une découpure générant des parois de matière opposées. La distance entre les parois de matière de la rainure est telle que ces parois ne peuvent venir en contact l'une contre l'autre dans des conditions usuelles de roulage.

Par « bloc », on entend un élément en relief délimité par des rainures et comprenant des parois latérales et une face de contact, cette dernière étant destinée à venir en contact avec une chaussée pendant le roulage.

Par « taux d'entaillement surfacique » d'une bande de roulement, on entend la quantité de creux présente sur la surface de roulement de cette bande de roulement. Ce creux est notamment généré par les rainures de la bande de roulement.

Par « moule », on entend un ensemble d'éléments de moule séparés qui, par rapprochement relatif, permettent de délimiter un espace de moulage toroïdal.

Par « direction radiale », on entend une direction qui est perpendiculaire à l'axe de rotation du pneu (cette direction correspond à la direction de l'épaisseur de la bande de roulement).

Par « direction axiale », on entend une direction parallèle à l'axe de rotation du pneu.

Par « direction circonférentielle », on entend une direction qui est tangente à tout cercle centré sur l'axe de rotation. Cette direction est perpendiculaire à la fois à la direction axiale et à la direction radiale.

### RESUME DE L'INVENTION

L'invention concerne une bande de roulement pour pneumatique neige comportant une pluralité de blocs séparés par des rainures. Les blocs sont pourvus d'incisions se séparant en plusieurs parties à partir d'une certaine profondeur, dites incisions complexes. Chaque incision complexe présente, selon une vue en coupe, une première partie rectiligne s'étendant radialement, à partir de la surface de roulement de la bande de roulement, et une seconde partie prolongeant la première partie et comportant au moins deux branches comprenant chacune une extrémité. La bande de roulement comprend, en outre, des cavités, chaque cavité s'étend entre les branches d'une incision complexe. Chaque cavité comprend un fond situé au même niveau que les extrémités des branches. Les cavités de la bande de roulement et les rainures sont configurées de sorte que cette bande de roulement présente un taux d'entaillement surfacique en fin d'usure supérieur ou égal à 35%. En outre, la distance entre deux branches de deux incisions complexes adjacentes est au moins égale à 2 mm.

L'invention propose ainsi de venir générer des creux, à partir des cavités, lorsque la bande de roulement atteint un certain niveau usure. Ces creux vont venir délimiter des nervures de gomme de largeur au moins égale à 2 mm, ce qui confère à ces nervures une bonne résistance aux sollicitations mécaniques exercées par la chaussée. En outre, la présence de creux dans la bande de roulement va permettre de créer des augmentations de pression sur les arêtes de ces nervures, ce qui augmente l'effet de « grattage » du pneumatique. Enfin, ces creux vont constituer des réservoirs aptes à stocker de la neige, ce qui améliore l'adhérence de la bande de roulement sur une chaussée enneigée.

Dans un mode de réalisation préférentiel, chaque cavité s'étend à partir de son fond jusqu'à la première partie rectiligne de l'incision complexe encadrant cette cavité, cette première partie rectiligne s'étendant dans la bande de roulement sur une profondeur comprise entre 10% et 60% de l'épaisseur de la bande de roulement à l'état neuf.

On peut ainsi ajuster le niveau d'usure déclenchant l'apparition des cavités sur la surface de roulement de la bande de roulement.

Dans une variante de réalisation, les branches des incisions complexes sont rectilignes et sont symétriques par rapport à un plan orthogonal à la surface de roulement de la bande de roulement, ces branches faisant un angle θ au plus égal à 20° avec ce plan.

Cette forme de branches permet de faire apparaître de manière plus progressive la seconde partie de l'incision, ce qui améliore l'esthétique globale du pneumatique. Cet avantage est accentué lorsque les cavités occupent tout l'espace entre les deux branches des incisions.

Dans une variante de réalisation, la bande de roulement comprend au moins une incision s'étendant de manière rectiligne dans la profondeur de la bande de roulement, dite incision simple. Cette incision simple est disposée entre deux incisions complexes, chacune de ces incisions complexes encadrant une cavité. L'incision simple s'étend dans la profondeur de la bande de roulement mais pas au-delà de la moitié de la hauteur des cavités.

En ajoutant des incisions simples dans la bande de roulement, on vient créer des arêtes supplémentaires et on accentue l'effet de grattage sur la neige lors du début de vie du pneumatique. Comme ces incisions simples s'étendent partiellement dans la profondeur de la bande de roulement, celles-ci ne vont pas diminuer la rigidité des nervures générées par les cavités, en fin de vie. L'invention permet donc d'obtenir une bande de roulement présentant une bonne adhérence sur neige en début de vie sans dégrader cette performance en fin de vie.

Dans une variante de réalisation, les incisions simples et les incisions complexes s'étendent sur la surface de la bande de roulement à l'état neuf selon des directions d'extension respectives, chacune de ces directions d'extension ayant une composante circonférentielle et/ou une composante axiale. Le nombre obtenu en faisant le rapport entre la somme des composantes axiales des incisions simples et des incisions complexes à l'aire de l'empreinte de contact, est supérieur à 110 micromètres/mm².

De cette manière, on optimise l'adhérence de la bande de roulement en début de vie.

Dans une variante de réalisation, les blocs forment sur la bande de roulement une sculpture de forme générale en V conférant à cette bande de roulement un sens de roulage préférentiel.

Les parois latérales des blocs forment des arêtes avec les faces de contact de ces blocs. Ces arêtes participent à l'adhérence de la bande de roulement tant en début de vie qu'en fin de vie. En donnant aux blocs de la bande de roulement une forme en V, on augmente la longueur des arêtes des blocs et on améliore en conséquence l'adhérence sur une chaussée enneigée.

Dans un mode de réalisation préférentiel, la bande de roulement comprend des protubérances, chaque protubérance faisant saillie à partir du fond d'une cavité, la hauteur de cette protubérance correspondant à au moins 1/6 de la hauteur de la cavité.

De cette manière, on évite que des cailloux ne viennent se loger dans les cavités lorsque celles-ci apparaissent sur la surface de la bande de roulement. On limite ainsi les risques de détérioration mécanique du fond des cavités ainsi que de la structure de renforcement interne du pneumatique.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente une vue partielle de la surface de roulement d'une bande de roulement à l'état neuf, selon l'invention ;
- la **figure 2** représente un bloc de la partie centrale de la bande de roulement de la **figure 1** **;**
- la **figure 3** représente schématiquement une vue en coupe du bloc de la **figure 2** **;**
- la **figure 4** représente schématiquement une vue en coupe du bloc de la **figure 2****,** à l'état usé ;
- la **figure 5** représente une vue partielle de la surface de roulement de la bande de roulement de la **figure 1****,** à l'état usé ;
- la **figure 6** représente une vue en coupe partielle du bloc de la **figure 2****,** selon un second mode de réalisation ;
- la **figure 7** représente une vue en coupe partielle du bloc de la **figure 2****,** selon un troisième mode de réalisation ;
- la **figure 8** représente une vue en coupe partielle du bloc de la **figure 2****,** selon un quatrième mode de réalisation ;
- la **figure 9** représente une vue en coupe partielle du bloc de la **figure 2****,** selon un cinquième mode de réalisation ;
- la **figure 10** représente un élément moulant apte à être placé dans un moule de vulcanisation pour le moulage d'une incision complexe et d'une cavité associée à cette incision, conformément au mode de réalisation de la **figure 3****.**

Dans la description qui va suivre, des éléments sensiblement identiques ou similaires seront désignés par des références identiques.

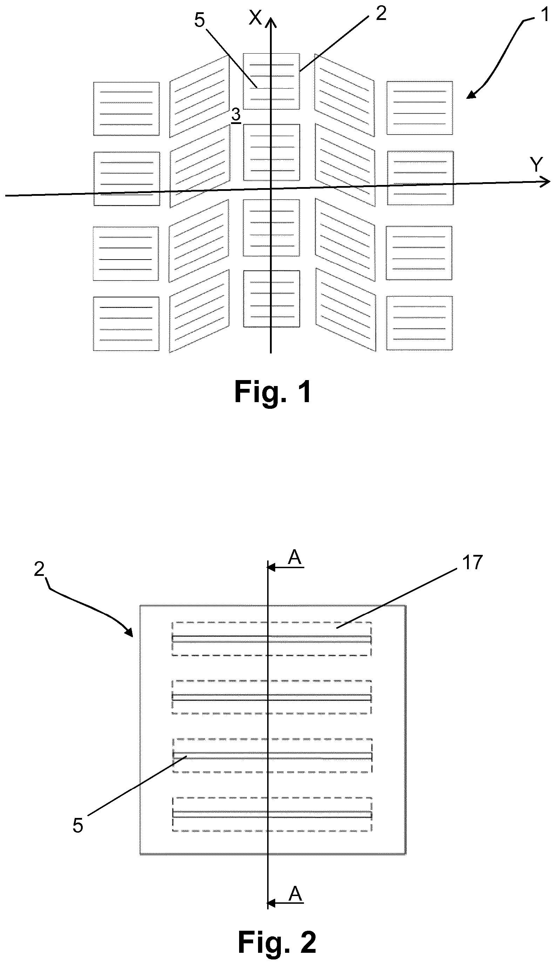

La **figure 1** représente une vue partielle de la surface de roulement d'une bande de roulement 1 à l'état neuf, selon l'invention.

Cette bande de roulement comprend une pluralité de blocs 2 délimités par des rainures 3. Chaque bloc 2 comprend une pluralité d'incisions 5 débouchant sur la surface de roulement de la bande de roulement. Chaque incision s'étend sur cette surface de roulement selon une direction d'extension donnée. Cette direction d'extension présente une composante circonférentielle, c'est-à-dire une composante selon l'axe circonférentielle X, et une composante axiale, c'est-à-dire une composante selon l'axe axial Y. En fonction des valeurs prises par la composante circonférentielle et par la composante axiale, l'incision est dite soit transversale (composante circonférentielle nulle), soit circonférentielle (composante axiale nulle), ou soit oblique (composantes circonférentielles et axiales non nulles).

On notera que les blocs 2 constituent ici une sculpture de forme générale en V conférant à la bande de roulement 1 un sens de roulage préférentiel.

La **figure 2** est une vue agrandie d'un bloc 2 de la partie centrale de la bande de roulement illustrée à la **figure 1****.**

Cette **figure 2** représente, en traits pointillés, des cavités 17 disposées à l'intérieur du bloc 2, respectivement dans le prolongement des incisions 5.

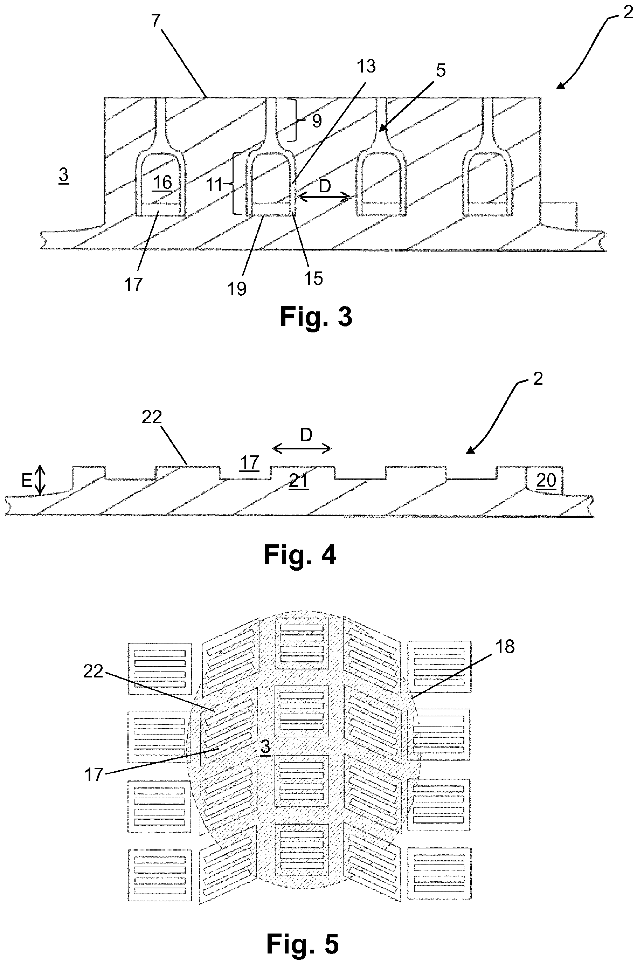

La **figure 3** est une vue en coupe du bloc 2 de la **figure 1****,** selon la ligne A-A de cette figure. Sur cette figure, on voit que l'incision 5 se sépare en plusieurs parties à partir d'une certaine profondeur. Cette incision 5 sera appelée incision complexe dans la suite de la description. Cette incision complexe 5 comprend ainsi une première partie rectiligne 9 et une seconde partie 11 prolongeant la première partie 9. La première partie 9 s'étend radialement à partir de la surface de roulement 7 de la bande de roulement sur une profondeur comprise entre 10% et 60% de l'épaisseur E de la bande de roulement à l'état neuf. La seconde partie 11 de l'incision 5 comporte au moins deux branches 13 encadrant un volume. Dans l'exemple de la **figure 1****,** ce volume comprend un volume de gomme 16 et un volume de creux 17 formant une cavité dans la bande de roulement. Afin de faciliter la compréhension de l'invention, les limites de cette cavité 17 ont été réalisées en pointillées. La cavité 17 s'étend ainsi entre les branches 13 de l'incision complexe. Plus particulièrement, la cavité comprend un fond 19 situé au même niveau que des extrémités 15 des branches 13.

On notera que sur les **figures 1** et **2****,** l'incision complexe 5 ne s'étend pas sur toute la longueur du bloc 1. De cette manière, le volume de gomme 16 dans la **figure 3** est rattaché par ses extrémités au reste du bloc. Cela permet au volume de gomme 16 d'être maintenu au-dessus de la cavité 17, comme cela est représenté sur la **figure 3****.**

La **figure 4** est une vue en coupe du bloc 2 lorsque la bande de roulement est en fin d'usure. Dans cet état, l'épaisseur E de la bande de roulement correspond à la hauteur d'un témoin d'usure 20. Dans l'exemple d'une bande de roulement pour un véhicule de tourisme, la hauteur du témoin d'usure est de 1,6 mm. Sur la **figure 4****,** les cavités 17 de la bande de roulement délimitent des nervures de gomme 21. Chaque nervure comprend une surface de contact 22 destinée à entrer en contact avec la chaussée au cours d'un roulage.

On notera que la largeur D de chaque nervure correspond, sur la **figure 1****,** à la distance entre deux branches de deux incisions complexes adjacentes. Cette largeur D est au moins égale à 2 mm.

La **figure 5** représente une vue partielle de la surface de roulement de la bande de roulement 1 en fin d'usure.

Sur cette figure, on a représenté en traits pointillés les limites 18 d'une empreinte de contact formée par le contact de la bande de roulement avec une chaussée, à un instant donné lors d'un roulage. A partir de cette empreinte, il est possible de déterminer une aire de l'empreinte de contact. Cette aire (en hachurée sur la **figure 5**) correspond à la surface délimitée par les limites 18 de l'empreinte de contact, cette surface étant déterminée dans le plan de la surface de roulement de la bande de roulement.

Sur la **figure 5****,** les cavités 17 et les rainures 3 génèrent du creux dans la bande de roulement. Il est possible de quantifier ce creux en déterminant le taux d'entaillement surfacique de la bande de roulement. Ce taux d'entaillement surfacique correspond au nombre obtenu en faisant le rapport entre, d'une part, la différence entre l'aire de l'empreinte de contact et l'aire des surfaces de contact 22 des nervures comprises dans l'empreinte de contact et d'autre part cette aire de l'empreinte de contact. Dans l'invention, les rainures 3 et les cavités 17 sont configurées de sorte que le taux d'entaillement surfacique de la bande de roulement en fin d'usure est supérieur ou égale à 35%.

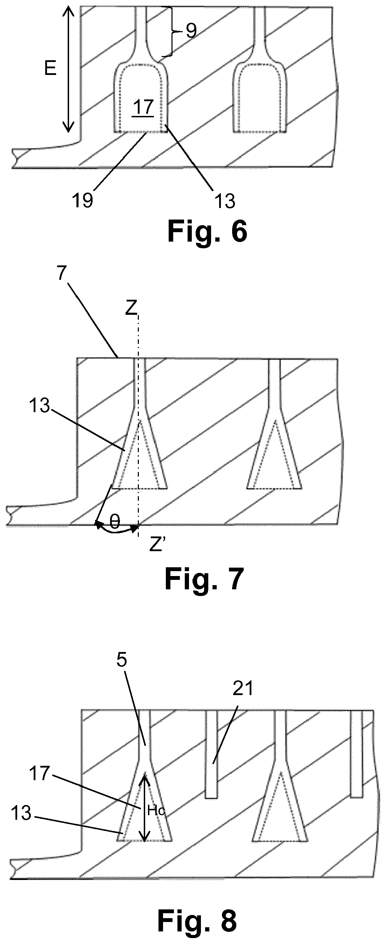

La **figure 6** représente un second mode de réalisation de l'invention, dans lequel la cavité 17 s'étend à partir de son fond 19 jusqu'à la première partie rectiligne 9 de l'incision complexe. Ainsi dans ce mode de réalisation, le volume disposé entre les deux branches de l'incision complexe est entièrement occupé par du creux.

La **figure 7** représente une troisième mode de réalisation de l'invention, dans lequel les branches 13 de l'incision complexe sont rectilignes et sont symétriques par rapport à un plan Z-Z' orthogonal à la surface de roulement 7 de la bande de roulement. Chaque branche 13 fait un angle θ au plus égal à 20° avec le plan Z-Z'.

La **figure 8** représente une variante de réalisation de la **figure 7** dans laquelle la bande de roulement comprend des incisions 21 s'étendant de manière rectiligne dans la profondeur de la bande de roulement. Ces incisions 21 sont appelées, dans la suite de la description, incisions simples. Chaque incision simple 21 est disposée entre deux incisions complexes 5 et chaque incision complexe encadre une cavité 17 qui, ici, occupe tout le volume entre les branches 13 de l'incision. L'incision simple 21 s'étend partiellement dans la profondeur de la bande de roulement. Plus précisément, l'incision simple ne s'étend pas au-delà de la moitié de la hauteur Hc des cavités.

On notera que les incisions complexes 5 et les incisions simples 21 sont configurées de sorte que le rapport entre la somme des composantes axiales des inscisions simples et des incisions complexes sur la bande de roulement à l'état neuf à l'aire de l'empreinte de contact est supérieur à 110 micromètres/mm².

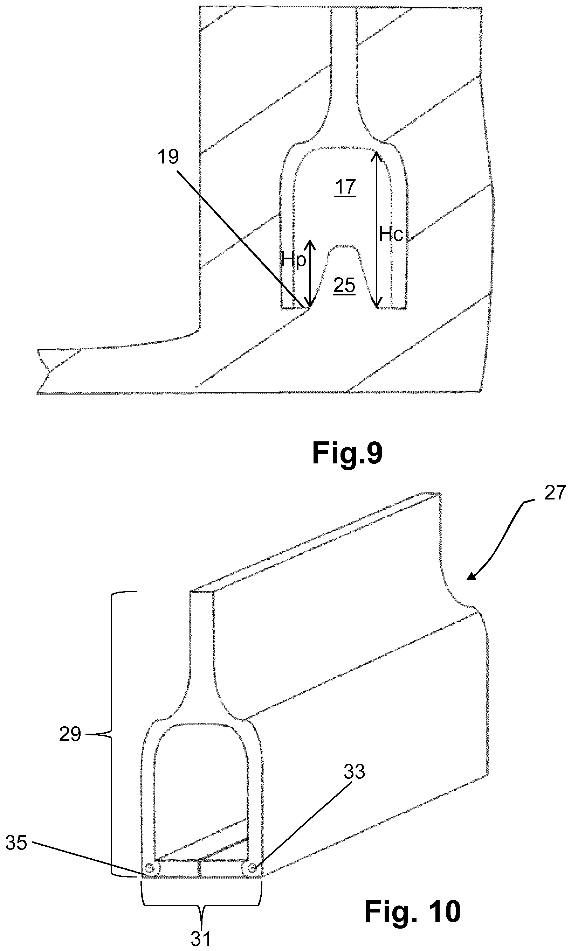

La **figure 9** représente un cinquième mode de réalisation de l'invention dans lequel la bande de roulement comprend des protubérances 25 faisant saillie à partir du fond 19 d'une cavité 17. La hauteur Hp de cette protubérance correspondant à au moins 1/6 de la hauteur Hc de la cavité.

La **figure 10** représente un élément moulant 27 apte à mouler une des incisions complexes 5 de la **figure 3****.** Cet élément moulant 27 comprend une partie principale 29 et des parties secondaires 31. La partie principale 29 de l'élément moulant présente une section en forme de Y et est destinée à mouler une incision complexe 5. Les parties secondaires sont globalement parallélépipédiques et sont destinées à mouler une cavité 17. Plus particulièrement, les parties secondaires sont montées articulées au moyen d'axes de pivot 33 avec respectivement des extrémités 35 de la partie principale 29. L'élément moulant 27 est ici représenté dans un état où il est apte à mouler l'incision complexe et la cavité au cours d'une opération de moulage. Lors d'une opération de démoulage, on veut extraire l'élément moulant 27 hors du pneumatique. Afin de faciliter cette extraction, les parties secondaires 31 de cet élément moulant vont pivoter progressivement autour des axes de pivot 33 pour s'aligner avec la partie principale 29 de l'élément moulant, et ceci au fur et à mesure de l'ouverture du moule.

L'invention n'est pas limitée aux exemples décrits et représentés et diverses modifications peuvent y être apportées sans sortir de son cadre.

Ainsi sur les **figures 1** et **2****,** on a représenté les incisions 5 comme des découpures continues. En variante, il est possible d'aligner plusieurs incisions 5 de faible longueur, les unes à la suite des autres.

En outre sur la **figure 7****,** on a représenté les branches des incisions complexes comme étant symétriques par rapport à l'axe Z-Z'. En variante, il est possible que ces branches ne soient pas symétriques. De la même manière, les longueurs des branches d'une même incision complexe ont été choisies sur la **figure 7** comme étant identiques. En variante, ces longueurs de branches peuvent être différentes. Dans une autre variante, il est possible d'associer pour une même incision complexe des branches de formes différentes, comme par exemple une branche rectiligne prolongeant la première partie rectiligne de l'incision complexe avec une branche ayant une forme de raccordement avec cette première partie rectiligne identique aux branches des incisions divulguées dans l'exemple de la **figure 3****.** Toutes les combinaisons de forme de branches sont possibles.

De plus, dans une variante de la **figure 8****,** il est possible d'ajouter une incision simple 21 entre le bord du bloc et l'incision complexe 5. La distance entre cette incision simple et ce bord de bloc devant être sélectionnée de sorte à ne pas trop fragiliser mécaniquement ce bloc.

Enfin sur la **figure 3****,** les cavités ont été représentées comme débouchant dans les branches 13 des incisions. En variante, il est possible que ces cavités s'étendent respectivement entre les branches de l'incision associée à cette cavité sans déboucher dans ces branches. Il existe alors des parties de matière entre les cavités et les branches.

## Revendications

1. Bande de roulement pour pneumatique neige comportant une pluralité de blocs (2) séparés par des rainures (3), les blocs étant pourvus d'incisions (5) se séparant en plusieurs parties à partir d'une certaine profondeur, dites incisions complexes, chaque incision complexe présentant, selon une vue en coupe, une première partie rectiligne (9) s'étendant radialement, à partir de la surface de roulement (7) de la bande de roulement, et une seconde partie (11) prolongeant la première partie et comportant au moins deux branches (13) comprenant chacune une extrémité (15), la bande de roulement comprenant des cavités (17), chaque cavité s'étendant entre les branches (13) d'une incision complexe, chaque cavité comprenant un fond (19) situé au même niveau que les extrémités (15) des branches (13) **caractérisée en ce que** les cavités (17) et les rainures (3) de la bande de roulement sont configurées de sorte que cette bande de roulement présente un taux d'entaillement surfacique, en fin d'usure, supérieur ou égal à 35% et **en ce que** la distance (D) entre deux branches de deux incisions complexes (5) adjacentes est au moins égale à 2 mm.

2. Bande de roulement selon la revendication 1, **caractérisée en ce que** chaque cavité (17) s'étend à partir de son fond (19) jusqu'à la première partie rectiligne (9) de l'incision complexe encadrant cette cavité, cette première partie rectiligne s'étendant dans la bande de roulement sur une profondeur comprise entre 10% et 60% de l'épaisseur (E) de la bande de roulement à l'état neuf.

3. Bande de roulement selon l'une des revendications 1 ou 2, **caractérisée en ce que** les branches (13) des incisions complexes sont rectilignes et sont symétriques par rapport à un plan (Z-Z') orthogonal à la surface de roulement de la bande de roulement, ces branches faisant un angle θ au plus égal à 20° avec ce plan.

4. Bande de roulement selon l'une quelconque des revendications 1 à 3, **caractérisée en ce que** la bande de roulement comprend au moins une incision (21) s'étendant de manière rectiligne dans la profondeur de la bande de roulement, dite incision simple, cette incision simple (21) étant disposée entre deux incisions complexes (5), chacune de ces incisions complexes encadrant une cavité (17), et **en ce que** l'incision simple (21) s'étend dans la profondeur de la bande de roulement mais pas au-delà de la moitié de la hauteur (Hc) des cavités.

5. Bande de roulement selon l'une quelconque des revendications 1 à 4, **caractérisée en ce que** les incisions simples (21) et les incisions complexes (5) s'étendent sur la surface de la bande de roulement à l'état neuf, selon des directions d'extension respectives, chacune de ces directions d'extension ayant une composante circonférentielle (Cx) et/ou une composante axiale (Cy) et **en ce que** le nombre obtenu en faisant le rapport entre la somme des composantes axiales (Cy) des incisions simples et des incisions complexes à l'aire de l'empreinte de contact (23), est supérieur à 110 micromètres/mm².

6. Bande de roulement selon l'une quelconque des revendications 1 à 5, **caractérisée en ce que** les blocs (2) forment sur la bande de roulement une sculpture de forme générale en V conférant à cette bande de roulement un sens de roulage préférentiel.

7. Bande de roulement selon l'une quelconque des revendications 1 à 6, **caractérisée en ce que** la bande de roulement comprend des protubérances (25), chaque protubérance faisant saillie à partir du fond (19) d'une cavité (17), la hauteur (Hp) de cette protubérance correspondant à au moins 1/6 de la hauteur de la cavité (Hc).

## Patentansprüche

1. Laufstreifen für einen Winterreifen, der eine Vielzahl von durch Rillen (3) getrennten Blöcken (2) aufweist, wobei die Blöcke mit Einschnitten (5) versehen sind, die ausgehend von einer bestimmten Tiefe in mehrere Teile aufgeteilt sind, komplexe Einschnitte genannt, wobei jeder komplexe Einschnitt gemäß einer Schnittansicht einen ersten geradlinigen Teil (9), der sich radial ausgehend von der Lauffläche (7) des Laufstreifens erstreckt, und einen zweiten Teil (11) aufweist, der den ersten Teil verlängert und mindestens zwei Zweige (13) aufweist, die je ein Ende (15) enthalten, wobei der Laufstreifen Hohlräume (17) enthält, wobei jeder Hohlraum sich zwischen den Zweigen (13) eines komplexen Einschnitts erstreckt, wobei jeder Hohlraum einen Boden (19) enthält, der sich auf der gleichen Höhe befindet wie die Enden (15) der Zweige (13), **dadurch gekennzeichnet, dass** die Hohlräume (17) und die Rillen (3) des Laufstreifens so konfiguriert sind, dass dieser Laufstreifen einen flächenbezogenen Negativprofil-Anteil am Ende der Abnutzung von mehr als oder gleich 35% aufweist, und dass der Abstand (D) zwischen zwei Zweigen von zwei benachbarten komplexen Einschnitten (5) mindestens gleich 2 mm ist.

2. Laufstreifen nach Anspruch 1, **dadurch gekennzeichnet, dass** jeder Hohlraum (17) sich ausgehend von seinem Boden (19) bis zum ersten geradlinigen Teil (9) des komplexen Einschnitts erstreckt, der diesen Hohlraum umrahmt, wobei dieser erste geradlinige Teil sich im Laufstreifen über eine Tiefe erstreckt, die zwischen 10% und 60% der Dicke (E) des Laufstreifens im Neuzustand liegt.

3. Laufstreifen nach einem der Ansprüche 1 oder 2, **dadurch gekennzeichnet, dass** die Zweige (13) der komplexen Einschnitte geradlinig und symmetrisch bezüglich einer Ebene (Z-Z') orthogonal zur Lauffläche des Laufstreifens sind, wobei diese Zweige einen Winkel θ höchstens gleich 20° mit dieser Ebene bilden.

4. Laufstreifen nach einem der Ansprüche 1 bis 3, **dadurch gekennzeichnet, dass** der Laufstreifen mindestens einen Einschnitt (21) enthält, der sich geradlinig in der Tiefe des Laufstreifens erstreckt, einfacher Einschnitt genannt, wobei dieser einfache Einschnitt (21) zwischen zwei komplexen Einschnitten (5) angeordnet ist, wobei jeder dieser komplexen Einschnitte einen Hohlraum (17) umrahmt, und dass der einfache Einschnitt (21) sich in der Tiefe des Laufstreifens, aber nicht über die Hälfte der Höhe (Hc) der Hohlräume hinaus erstreckt.

5. Laufstreifen nach einem der Ansprüche 1 bis 4, **dadurch gekennzeichnet, dass** die einfachen Einschnitte (21) und die komplexen Einschnitte (5) sich an der Oberfläche des Laufstreifens im Neuzustand gemäß jeweiligen Ausdehnungsrichtungen erstrecken, wobei jede dieser Ausdehnungsrichtungen eine Umfangskomponente (Cx) und/oder eine axiale Komponente (Cy) hat, und dass die erhaltene Zahl, indem das Verhältnis der Summe der axialen Komponenten (Cy) der einfachen Einschnitte und der komplexen Einschnitte zum Bereich der Kontaktaufstandsfläche (23) bestimmt wird, höher als 110 Mikrometer/mm² ist.

6. Laufstreifen nach einem der Ansprüche 1 bis 5, **dadurch gekennzeichnet, dass** die Blöcke (2) auf dem Laufstreifen ein Profil von allgemeiner V-Form bilden, was diesem Laufstreifen eine bevorzugte Fahrtrichtung verleiht.

7. Laufstreifen nach einem der Ansprüche 1 bis 6, **dadurch gekennzeichnet, dass** der Laufstreifen Vorsprünge (25) enthält, wobei jeder Vorsprung ausgehend vom Boden (19) eines Hohlraums (17) vorsteht, wobei die Höhe (Hp) dieses Vorsprungs mindestens 1/6 der Höhe des Hohlraums (Hc) entspricht.

## Claims

1. Tread for a snow tyre comprising a plurality of blocks (2) separated by grooves (3), the blocks being provided with sipe incisions (5) dividing into several parts from a certain depth onwards, referred to as complex sipes, each complex sipe having, when viewed in cross section, a rectilinear first part (9) extending radially from the tread surface (7) of the tread, and a second part (11) extending the first part and comprising at least two branches (13) each having an end (15), the tread comprising cavities (17), each cavity extending between the branches (13) of a complex sipe, each cavity comprising a bottom (19) situated at the same level as the ends (15) of the branches (13), **characterized in that** the cavities (17) and the grooves (3) of the tread are configured so that this tread has a voids surface ratio at the end of wear greater than or equal to 35%, and **in that** the distance (D) between two branches of two adjacent complex sipes (5) is at least equal to 2 mm.

2. Tread according to Claim 1, **characterized in that** each cavity (17) extends from its bottom (19) as far as the rectilinear first part (9) of the complex sipe flanking this cavity, this rectilinear first part extending into the tread over a depth of between 10% and 60% of the thickness (E) of the tread in the new state.

3. Tread according to either of Claims 1 and 2, **characterized in that** the branches (13) of the complex sipes are rectilinear and are symmetric about a plane (Z-Z') orthogonal to the tread surface of the tread, these branches making an angle θ at most equal to 20° with this plane.

4. Tread according to any one of Claims 1 to 3, **characterized in that** the tread comprises at least one sipe (21) extending in a rectilinear manner into the depth of the tread, referred to as a simple sipe, this simple sipe (21) being positioned between two complex sipes (5), each of these complex sipes flanking a cavity (17), and **in that** the simple sipe (21) extends into the depth of the tread but not beyond half of the height (Hc) of the cavities.

5. Tread according to any one of Claims 1 to 4, **characterized in that** the simple sipes (21) and the complex sipes (5) extend over the surface of the tread in the new state, in respective directions of extension, each of these directions of extension having a circumferential component (Cx) and/or an axial component (Cy) and **in that** the number obtained by calculating the ratio between the sum of the axial components (Cy) of the simple sipes and of the complex sipes to the surface area of the contact patch (23) is greater than 110 micrometres/mm².

6. Tread according to any one of Claims 1 to 5, **characterized in that** the blocks (2) form, on the tread, a tread pattern of overall V-shape giving this tread a preferred direction of running.

7. Tread according to any one of Claims 1 to 6, **characterized in that** the tread comprises protuberances (25), each protuberance projecting from the bottom (19) of a cavity (17), the height (Hp) of this protuberance corresponding to at least one sixth of the height of the cavity (Hc).
